(19) Europäisches Patentamt
European Patent Office
Office européen des brevets

(11) **EP 4 579 495 A1**

(12) **DEMANDE DE BREVET EUROPEEN**

(43) Date de publication:
**02.07.2025 Bulletin 2025/27**

(21) Numéro de dépôt: **24223599.2**

(22) Date de dépôt: **30.12.2024**

(51) Classification Internationale des Brevets (IPC):
**G06F 17/18** (2006.01)  **G06N 20/00** (2019.01)
**G06F 18/2431** (2023.01)

(52) Classification Coopérative des Brevets (CPC):
**G06F 17/18; G06F 18/214; G06F 18/2431;**
**G06N 20/00;** G06F 2218/12

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH MA MD TN**

(30) Priorité: **30.12.2023 FR 2315515**

(71) Demandeur: **Commissariat à l'Energie Atomique et aux Energies Alternatives**
**75015 Paris (FR)**

(72) Inventeurs:
• **SAUREL, Nicolas**
**21120 Is sur Tille (FR)**
• **POIRIER-HERBECK, Lisa**
**21120 Is sur Tille (FR)**

(74) Mandataire: **INNOV-GROUP**
**209 Avenue Berthelot**
**69007 Lyon (FR)**

(54) **PROCÉDÉ DE PRÉDICTION DE LA SURVENUE D'UN ÉVÈNEMENT À PARTIR DE DONNÉES MESURÉES**

(57) Procédé de prédiction de la survenue d'un évènement comportant:
- a) constitution d'une base de données, comportant au moins un motif, le ou chaque motif étant une série de valeurs de la grandeur physique, représentative d'un événement ;
- b) acquisition de mesures de la grandeur physique par au moins un détecteur et formation d'une série temporelle de mesures ;
- c) à chaque instant de mesure, d'un test de détection de la survenue d'un évènement à un instant de survenue d'évènement;

- d)- en cas de détection de la survenue d'un évènement, identification de l'évènement en fonction de chaque motif mémorisé dans la base de données, l'identification de l'évènement survenant à un instant d'identification ;
- en l'absence de détection de la survenue d'un évènement, réitération des étapes a) à c) ;
- e) après que l'évènement a été identifié, prévision de mesures à des instants postérieurs à l'instant d'identification.

Fig. 6B

**Description**

## DOMAINE TECHNIQUE

Le domaine technique de l'invention est le traitement de données, en particulier des données issues de mesures, en vue de la prédiction de la survenue d'un évènement.

## ART ANTERIEUR

Il est usuel que des détecteurs soient déployés dans le voisinage des installations nucléaires, de façon à détecter la survenue d'un évènement radiologique. Selon la pratique usuelle, un seuil de détection est pris en compte. Une situation d'alerte est détectée lorsque l'irradiation mesurée par un détecteur excède un seuil prédéterminé.

Une telle solution suppose une prise en compte d'un seuil fixé arbitrairement. Or, le bruit de fond radiologique peut être soumis à des fluctuations. Ainsi, une simple comparaison à un seuil peut générer des faux positifs, lorsque le seuil est trop faible, ou des faux négatifs, lorsque le seuil est trop élevé.

De plus, la survenue d'un évènement radiologique est détectée après qu'elle a survenu. Il ne s'agit donc pas de prévention, mais de constatation.

US20160239755 décrit un procédé visant à prévenir une défaillance d'un réacteur d'avion à partir de paramètres mesurés par des capteurs, suite à une phase d'apprentissage supervisé. US11551111 décrit un système de détection d'une survenue d'une anomalie résultant d'une mesure. Une anomalie correspond par exemple à une valeur mesurée en dehors d'un intervalle de confiance déterminé au cours d'une phase d'apprentissage.

Les inventeurs proposent une méthode permettant d'anticiper la survenue d'un évènement radiologique. Cela permet de mettre en place des mesures adéquates, préalablement à la survenue de l'incident. La méthode proposée par les inventeurs ne se limite pas à la surveillance radiologique. Elle peut être appliquée dans d'autres types d'application, par exemple la mesure de concentration en gaz ou en particules polluantes, ou des mesures réalisées à des fins de contrôle non destructif, par exemple une vibration anormale d'un composant, ou à des mesures réalisées à des fins de diagnostic.

## EXPOSE DE L'INVENTION

Un premier objet de l'invention est un procédé de prédiction de la survenue d'un évènement à partir d'au moins une mesure d'une grandeur physique effectuée en différents instants, le procédé comportant les étapes suivantes :

- a) constitution d'une base de données, comportant au moins un motif, le ou chaque motif étant une série de valeurs de la grandeur physique, en différents instants successifs, chaque motif étant représentatif d'un évènement;
- b) acquisition de mesures de la grandeur physique par au moins un détecteur en différents instants de mesure successifs, de façon à former une série temporelle de mesures ;
- c) à chaque instant de mesure, à partir de la série temporelle de mesures, application d'un test de détection de la survenue d'un évènement à un instant de survenue d'évènement, l'instant de survenue d'évènement correspondant à l'instant de mesure ou à un instant postérieur à l'instant de mesure ;
- d) en cas de détection de la survenue d'un évènement, identification de l'évènement en fonction de chaque motif de la base de données, l'identification de l'évènement survenant à un instant d'identification ;

 - en l'absence de détection de la survenue d'un évènement, réitération des étapes a) à c) ;

- e) après que l'évènement a été identifié, prévision de mesures à des instants postérieurs à l'instant d'identification.

Les étapes c) à e) peuvent être mises en oeuvre par une unité de traitement.

Selon une possibilité, au cours de l'étape c), le test de détection peut être appliqué à au moins la grandeur physique mesurée à l'instant de mesure, de façon que l'instant de survenue d'évènement corresponde à l'instant de mesure.

Selon une possibilité, l'étape c) comporte :

- c-i) à partir de mesures acquises à des instants antérieurs à l'instant de mesure, application d'un algorithme de prédiction, de façon à prédire des mesures à des instants postérieurs à l'instant de mesure ;
- c-ii) application du test de détection de la survenue de l'évènement en utilisant les mesures prédites aux instants postérieurs à l'instant de mesure, de façon que l'instant de survenue d'évènement est postérieur à l'instant de mesure.

Selon une possibilité, l'étape a) comporte :

- ai) réalisation de mesures de la grandeur physique durant une période d'observation, la période d'observation comportant différents instants d'observation ;
- aii) application d'un test de détection de survenue d'évènement à chaque instant d'observation ;
- aiii) en cas de détection de la survenue d'un évènement, mémorisation des grandeurs physiques mesurées postérieurement à la détection, de façon à former une série temporelle d'observation ;

- aiv) application d'un algorithme de classification à chaque série temporelle d'observation, de façon à définir au moins une classe représentative d'un évènement, ladite classe étant associée à un motif.

L'étape aiv) peut comporter une définition de plusieurs classes, les classes étant respectivement associées à différents motifs.

Lors de l'étape a), au moins un motif de la base de données peut être un motif obtenu par modélisation.

Lors de l'étape e), la prévision des mesures peut être réalisée en utilisant le motif associé à l'évènement identifié lors de l'étape d).

Lors de l'étape c), le test peut être basé sur une détection d'un franchissement d'un seuil.

Suite à une étape e), le procédé peut comporter une acquisition des mesures correspondant à l'évènement identifié, lesdites mesures formant une série de valeurs alimentant la base de données.

La grandeur physique peut être une grandeur choisie parmi :

- un niveau d'irradiation ;
- une concentration d'un analyte dans un milieu gazeux ou liquide ;
- un niveau de température ou d'humidité ou de pression ;
- une mesure électrique ou électrostatique ou magnétique ou acoustique.

Un deuxième objet de l'invention est un système de mesure, comportant :

- un détecteur, configuré pour mesurer une grandeur physique par au moins un détecteur en différents instants de mesure successifs, de façon à former une série temporelle de mesures ;
- une unité de traitement, configuré pour mettre en oeuvre les étapes c) à e) d'un procédé selon le premier objet de l'invention, à partir de mesures de la gradeur physique résultant du détecteur, l'unité de traitement étant reliée à une mémoire stockant une base de données, comportant au moins un motif, le ou chaque motif étant une série de valeurs de la grandeur physique, en différents instants successifs, chaque motif étant représentatif d'un évènement.

L'invention sera mieux comprise à la lecture de l'exposé des exemples de réalisation présentés, dans la suite de la description, en lien avec les figures listées ci-dessous.

**FIGURES**

La figure 1 illustre la présence d'évènements dans une série de mesure.

La figure 2 montre un exemple de système adapté à la mise en oeuvre de l'invention.

La figure 3A schématise les principales étapes d'un procédé selon un premier mode de réalisation de l'invention.

La figure 3B schématise les principales étapes d'un procédé selon un deuxième mode de réalisation de l'invention.

La figure 4 montre une acquisition de mesures d'une grandeur physique, correspondant à un niveau d'irradiation, au cours d'une phase d'observation, ainsi que l'identification de motifs dans lesdites données.

La figure 5A montre des classes résultant d'une classification des motifs identifiés au cours de la phase d'observation.

La figure 5B représente le centre de classes représentées sur la figure 5A.

Les figures 6A à 6C illustrent une application de l'invention à une mesure d'un niveau d'irradiation.

La figure 7 montre une acquisition de mesures d'une grandeur physique, correspondant à des mesures de type ECG (électrocardiogramme), au cours d'une phase d'observation.

La figure 8 montre des clusters résultant d'une classification des motifs identifiés au cours de la phase d'observation représentée sur la figure 7.

Les figures 9A et 9B illustrent une application de l'invention à une mesure de type ECG

**EXPOSE DE MODES DE REALISATION PARTICULIERS**

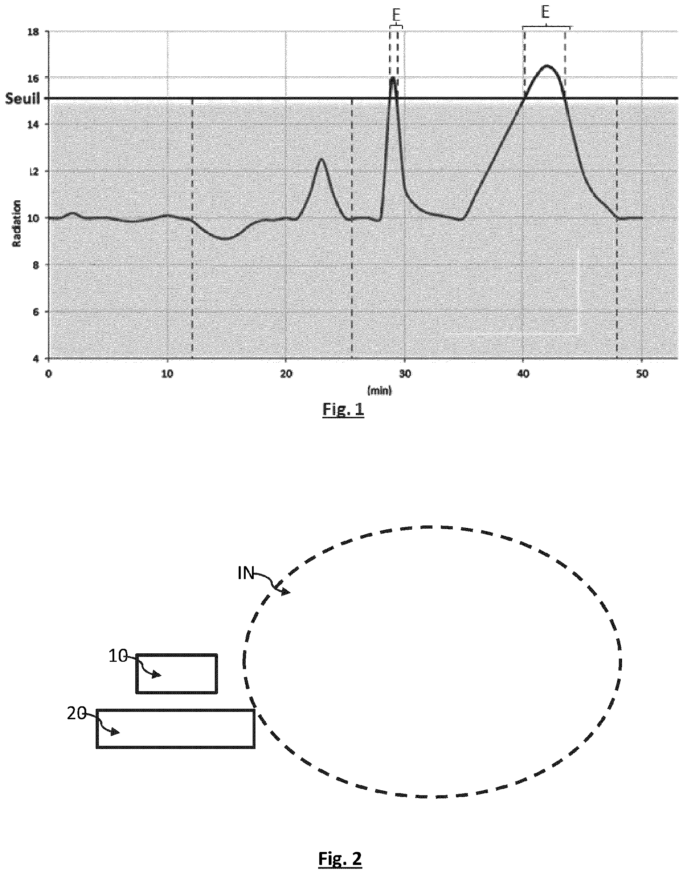

La figure 1 représente une évolution, en fonction du temps (axe des abscisses unité minutes), d'un niveau de radiation (axe des ordonnées). Sur la figure 1, la zone grisée correspond à une situation non préoccupante. Les plages temporelles désignées par des accolades correspondent à des évènements E, durant lesquels le niveau de radiation est supérieur à un seuil. Un objectif de l'invention est d'anticiper la survenue de tels évènements, de façon à en estimer certaines caractéristiques, par exemple l'ampleur ou la durée.

La figure 2 montre un système adapté à une mise en oeuvre de l'invention. Le système comporte un détecteur 10 relié à une unité de traitement 20. Dans l'exemple représenté, le détecteur est un détecteur de rayonnement gamma déployé dans un environnement, par exemple à proximité d'une installation nucléaire IN. Le détecteur peut par exemple être une chambre d'ionisation. Le détecteur est configuré pour générer, en différents instants de mesure, des données mesurées, correspondant à des niveaux d'irradiation.

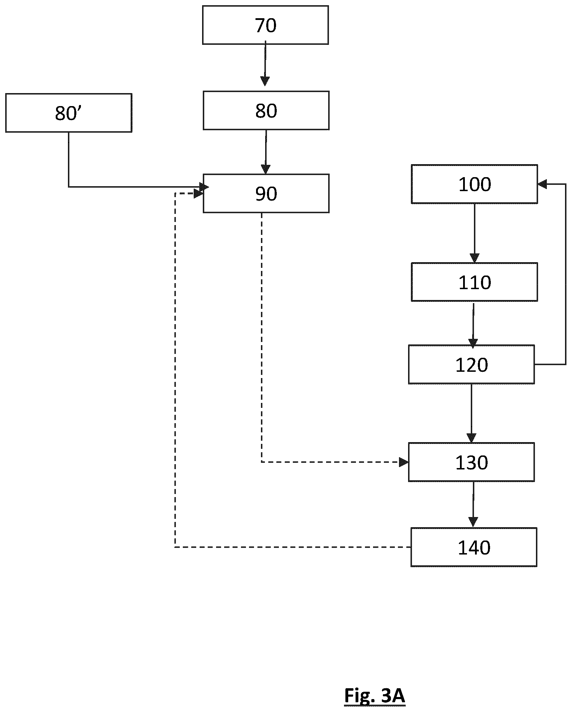

Le détecteur 10 est relié à une unité de traitement 20. L'unité de traitement est programmée pour mettre en oeuvre les étapes décrites par la suite, en lien avec les figures 3A à 3B. L'unité de traitement peut notamment comprendre un microprocesseur. L'objectif de ces étapes est d'anticiper la survenue d'un évènement, de façon à en anticiper les conséquences. Le terme évènement désigne une suite temporelle de données mesurées correspondant à une situation particulière. Il peut s'agir d'une situation particulière normale ou d'une anomalie, par exemple une exposition temporaire à un niveau d'irradiation élevé, ou à une montée progressive du niveau d'irradiation.

Dans d'autres domaines d'application, une anomalie peut être une vibration dont l'amplitude est anormale, ou, de façon plus générale, une mesure d'une grandeur physique représentative d'une anomalie, par exemple une concentration d'une espèce gazeuse dans l'air ou de façon plus générale une concentration d'une espèce chimique ou biologique dans un milieu liquide ou gazeux.

La figure 3A schématise les principales étapes d'un mode de réalisation de l'invention.

Le procédé suppose une phase préalable d'apprentissage, destinée à définir des motifs représentatifs d'un évènement. La phase d'apprentissage correspond aux étapes 70 à 90.

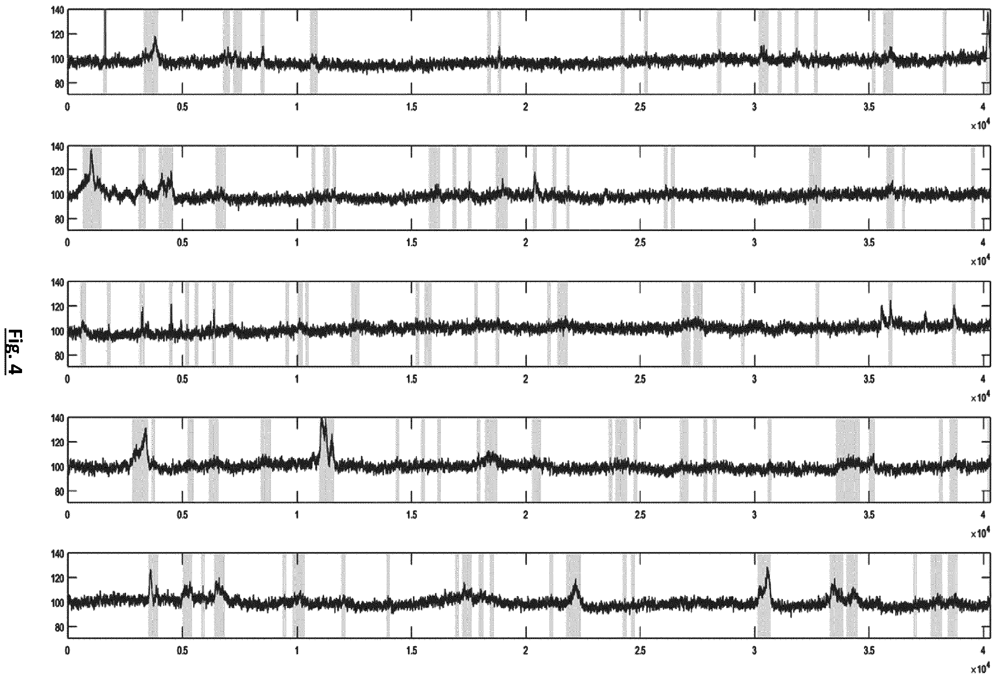

Etape 70 : acquisition de données d'apprentissage. Au cours de cette étape, le détecteur acquiert des données, dites données d'apprentissage, en étant soumis à des évènements tels que précédemment définis. La figure 4 représente des données acquises durant plusieurs jours. L'axe des abscisses correspond au temps (unité minutes) et l'axe des ordonnées correspond à des débits d'équivalent de dose (unité nSv/h). La phase d'apprentissage s'étend selon une période d'observation, regroupant des instants d'observation au cours desquels la grandeur physique est mesurée.

Etape 80 : détection de motifs.

Au cours de cette étape, on met en oeuvre un algorithme de détection de motifs. Il peut par exemple s'agir d'une détection de franchissement d'un seuil. Le seuil peut être calculé sur la base d'une moyenne et d'un écart-type glissants. Par exemple, à chaque instant $n$, le seuil $Th_n$ est tel que : $Th_n = \mu_n + k\sigma_n$ (1), où

$\sigma_n$ est l'écart-type calculé dans un intervalle temporel de longueur $l$

$\mu_n$ est la moyenne glissante calculée dans un intervalle temporel de longueur $N$. $N$ est par exemple égal à 20.

Un motif correspond à des données mesurées à des instants d'observation s'étendant entre deux franchissements du seuil. Il comporte des instants $n$ adjacents auxquels la donnée mesurée est supérieure au seuil.

Sur la figure 4, on a représenté, en grisé, des motifs détectés.

D'autres techniques d'extraction de motifs sont envisageables, par exemple des méthodes de type

- Matrix profile (profil de matrice), décrit dans C.-C. M. Yeh, Y. Zhu, L. Ulanova, N. Begum, Y. Ding, H. A. Dau, D. F. Silva, A. Mueen and E. Keogh, "Matrix profile i: all pairs similarity joins for time series: a unifying view that includes motifs, discords and shapelets," in IEEE 16th international conférence on data mining (ICDM), pp. 1317-1322, Ieee, 2016.
- Crossmatch, décrit dans M. Toyoda, Y. Sakurai, and Y. Ishikawa, "Pattern discovery in data streams under the time warping distance,"in The VLDB Journal, vol. 22, no. 3, pp. 295-318, 2013.
- Autoencoder (autoencodeur), décrit dans K. Bascol, R. Emonet, E. Fromont and J. M. Odobez, "Unsupervised interpretable pattern discovery in time séries using autoencoders," in : Joint IAPR International Workshops on Statistical Techniques in Pattern Recognition (SPR) and Structural and Syntactic Pattern Recognition (SSPR). Springer, Cham, 2016. P. 427-438

Etape 90 : classification de motifs

Au cours de cette étape, les motifs détectés lors de l'étape 80 font l'objet d'une classification, de façon à former des groupes de motifs, usuellement désignés par le terme cluster ou classe. Un groupe de motifs correspond à des motifs dont les caractéristiques sont considérées comme similaires. La classification est basée sur la forme temporelle des motifs.

L'algorithme de classification peut par exemple être un algorithme de type K-means (K-moyennes). De préférence, la mise en oeuvre de cet algorithme est précédée d'une phase visant à ramener les motifs détectés selon une même durée.. Il peut s'agir d'une interpolation linéaire.

Les motifs, placés selon une même échelle de temps, sont ensuite classifiés par l'algorithme itératif K-means, visant à définir K classes. La publication Artur, David "K-means++ : the advantages of Careful Seeding.", SODA'07 : Proceedings of the Eighteenth Annual ACM-SIAM Sympsium of Discrète Algorithms. 2007 pp. 1027-1035, décrit, en particulier dans la partie 2.2, un algorithme de classification K-means++ convenant à l'application. Selon cette approche, chaque classe est représentée par un centre de classe, qui correspond à une moyenne de tous les motifs formant ladite classe.

L'algorithme de classification peut être mis en oeuvre selon une méthode différente des méthodes K-means. Il peut par exemple s'agir de :

- k Medoids, décrit dans Kaufman, L., and Rousseeuw, P. J. (2009). Finding Groups in Data: An Introduction to Cluster Analysis. Hoboken, New Jersey: John Wiley & Sons, Inc.
- Classification hiérarchique, décrite dans Sibson, Robin. "SLINK: an optimally efficient algorithm for the single-link cluster method." The computer journal 16.1 (1973) : 30-34.

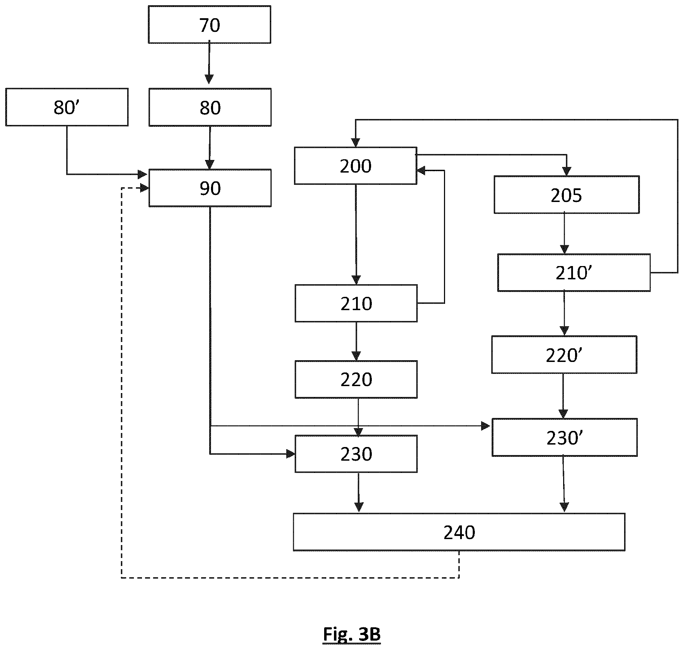

Selon une possibilité, la phase d'apprentissage comporte une prise en compte de motifs additionnels, qui résultent non pas de mesures effectuées, mais de simulations résultant de modèles. On peut par exemple simuler un motif représentatif de l'évolution de niveaux d'irradiation suite à un évènement anormal. Cela correspond à l'étape 80' représentée sur les figures 3A et 3B.

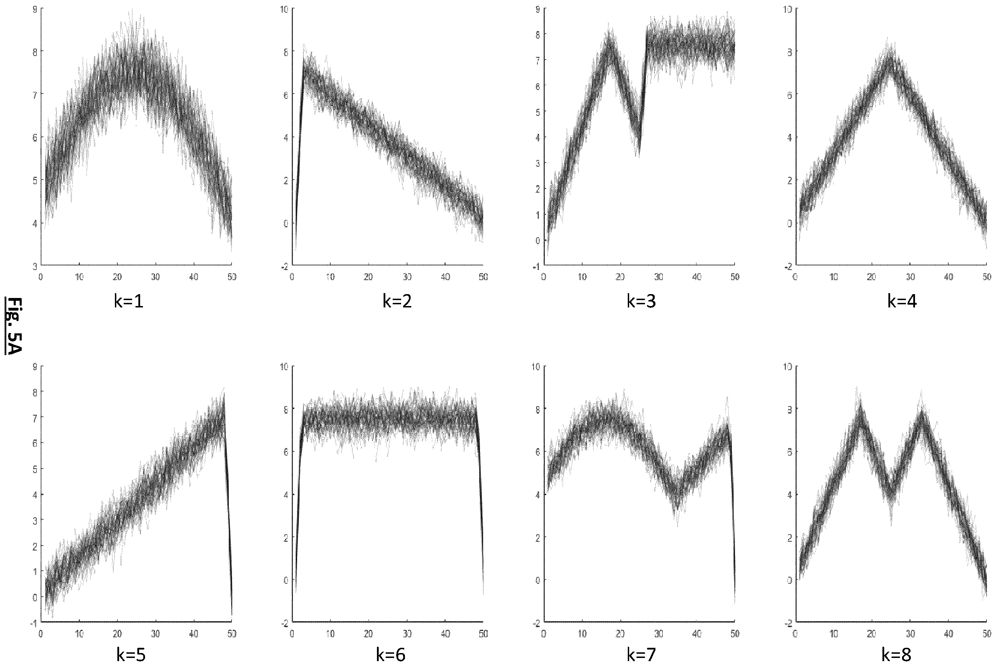

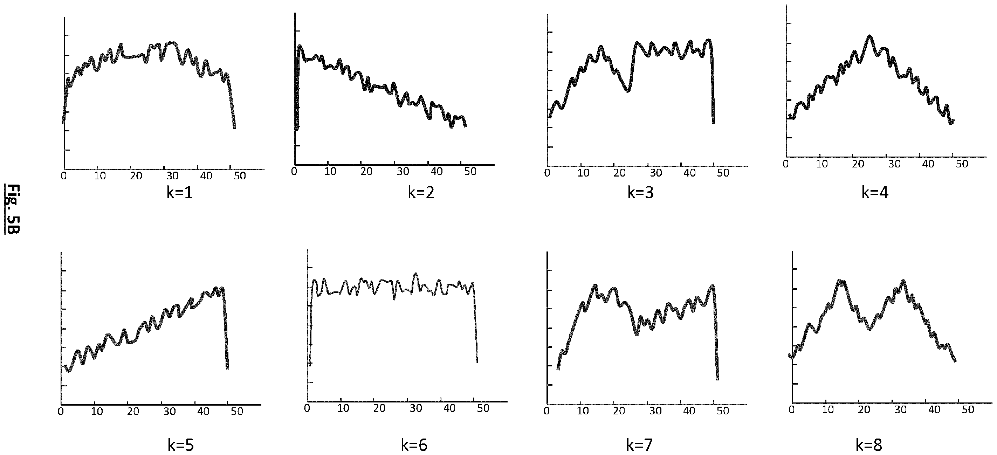

La figure 5A montre différents clusters de motifs. Chaque motif a préalablement fait l'objet d'une interpolation, de façon à être représenté selon une même durée. Les motifs sont normalisés en amplitude. Les motifs appartenant à un même cluster (i-e une même classe) sont considérés comme ayant une forme temporelle comparable. A chaque classe correspond un type d'évènement. Sur la figure 5B, on a représenté les centres de classes correspondant aux motifs représentés sur la figure 5B. Sur les figures 5A et 5B, chaque classe est repérée par un indice k compris entre 1 et 8.

Les motifs sont mémorisés. Le nombre de classes et leurs centres peuvent varier en fonction du temps. La base de données constituée dans les étapes 70 à 90 peut être complétée par des données mesurées au cours de l'étape 100 décrite ci-après, de façon à permettre un ajustement, en continu, du nombre et des paramètres de chaque classe. L'obtention des motifs est de préférence effectuée uniquement sur la base de mesures. Il s'agit d'un apprentissage non supervisé, sans recours à une labellisation effectuée sur la base d'une autre observation. Cela permet une mise à jour régulière, non supervisée, de la base de données comportant les motifs. Cela permet de prendre en compte une variabilité des conditions de mesure ou de la réponse du détecteur. La base de données peut ensuite être complétée lors de la mise en oeuvre du procédé, comme décrit par la suite. L'apprentissage non supervisé permet de ne prendre en compte que les mesures pour définir les motifs formant la base de données, sans recours à une labellisation résultant d'une autre observation.

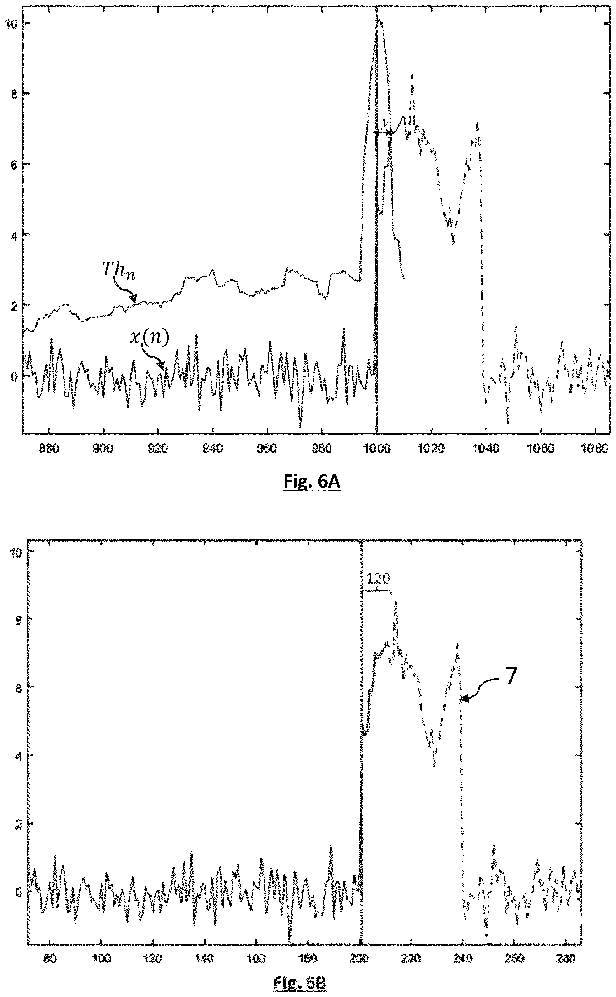

Etape 100 : Acquisition de données. Au cours de cette étape, la grandeur physique est mesurée en différents instants de mesure. Dans l'exemple décrit, les grandeurs physiques sont des mesures d'irradiation gamma provenant d'un détecteur de rayonnement adapté au contrôle environnemental. Sur la figure 6A, on a représenté une acquisition de mesures, qui correspond à la courbe $x(n)$. L'axe des abscisses correspond au temps $n$ (unité minutes) et l'axe des ordonnées correspond à un niveau d'irradiation (unités arbitraires). Les données représentées sur la figure 6A sont des données simulées. La courbe en pointillés correspond à l'évolution de la grandeur physique postérieurement à l'instant de mesure $n$.

Sur la figure 6A, on a également représenté l'évolution, en fonction du temps, du seuil $Th_n$ tel que défini dans (1).

Etape 110 : Détection de la survenue d'un évènement. Au cours de l'étape 110, on applique un test de détection de la survenue de l'évènement. Dans cet exemple, le test de détection de la survenue d'un évènement est effectué comme décrit en lien avec l'étape 80. Sur la figure 6A, on a matérialisé le franchissement du seuil $Th_n$ ($x(n) > Th_n$) par un trait plein vertical, correspondant à l'instant $n = 1000$.

Lorsque la survenue d'un évènement est détectée, l'instant auquel l'évènement survient est un instant de survenue d'évènement. Dans ce premier mode de réalisation, l'instant de survenue d'évènement correspond à l'instant de mesure, ou est déterminé à partir de l'instant de mesure. Par exemple, on peut considérer que l'évènement survient y incréments temporels avant l'instant du franchissement du seuil, ce qui est représenté sur la figure 6A, avec y = 10. Dans un deuxième mode de réalisation, décrit par la suite, l'instant de survenue d'évènement est postérieur à l'instant de mesure.

Tant qu'un motif n'a pas été détecté, les étapes 100 et 110 sont renouvelées.

La détection de la survenue d'un évènement par une moyenne et un écart type glissant n'est qu'un exemple. L'étape 110 peut être mise en oeuvre avec d'autres méthodes, comme évoqué dans l'étape 80.

Etape 120 : Identification de l'évènement détecté lors de l'étape 110, parmi les motifs mémorisés. Au cours de cette étape, on procède à une identification de l'évènement identifié dès les premiers instants suivant l'instant de détection de la survenue de l'évènement. Il s'agit de déterminer un motif, parmi les motifs mémorisés dans la base de données, le plus proche de l'évènement identifié.

Les premières valeurs mesurées après le franchissement du seuil sont comparées avec les premières valeurs de chaque centre de classe des motifs préalablement mémorisés. La comparaison est un calcul de distance par rapport à un des K motifs mémorisés. Chaque motif est désigné par un indice $k,$ tel que $1 \leq k \leq K$. On identifie le motif $k$ en déterminant, parmi les K motifs celui qui est à la plus petite distance des signaux mesurés depuis le franchissement du seuil. La distance $d_k$ entre la grandeur physique mesurée par rapport à chaque motif k est par exemple calculée par rapport au centre de classe de chaque motif. Il peut par exemple s'agir d'une distance euclidienne, auquel cas :

$$d_k = \sum_{i=1}^{n} |c_{i,k} - x(i)| \quad (2)$$

Où $i$ est un indice temporel depuis l'instant de franchissement du motif ($i = n'$-$n$, $n'$ correspondant à l'instant de franchissement du seuil), $n$ correspond à l'instant de mesure, et $c_i$ correspond au centre de la classe à l'instant $i$. $x(i)$ est la mesure à l'instant $i$.

Le motif $k$ identifié est celui qui minimise $d_k$.

Sur la figure 6B, on a représenté un exemple selon lequel le profil identifié correspond à la classe k = 7 de la figure 5A. Les grandeurs physiques mesurées utilisées pour identifier le motif sont celles correspondant à l'accolade 120.

L'identification du motif survient à un instant d'identification de l'évènement, confondu ou postérieur à l'instant de détection de la survenue de l'évènement.

L'identification du motif peut être effectuée par un algorithme d'identification basé sur une mesure de distance, comme précédemment décrit, ou par un algorithme de classification, par exemple LSTM (Long Short Term Memory), comme décrit dans Hochreiter, Sepp, and Jürgen Schmidhuber. « Long short-term memory. » Neural computation 9.8 (1997) : 1735-1780.

Etape 130 : Prédiction. Après que la classe du motif a été identifiée, la grandeur physique, en des instants p postérieurs à l'instant d'identification de l'évènement, est prédite, en se basant sur les premières valeurs du motif et des données d'apprentissage de la classe associée au motif. Ainsi, l'estimation de la grandeur physique, des instants p postérieurs à l'instant d'identification de l'évènement, est réalisée grâce à l'identification du motif résultant de l'étape 120, le plus rapidement possible après le franchissement du seuil. Dans cet exemple, l'instant d'identification de l'évènement correspond à un instant de mesure, car c'est sur la base de mesures réalisées entre l'instant de détection de la survenue de l'évènement et l'instant d'identification que l'évènement a été identifié.

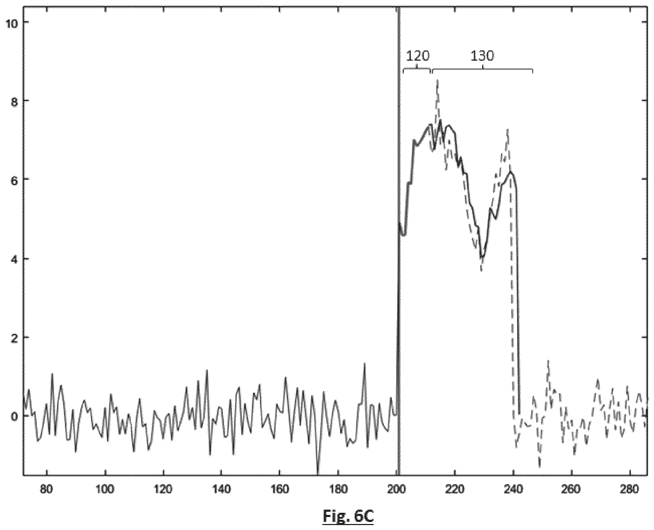

Sur la figure 6C, on a représenté sous l'accolade 130, la grandeur physique prédite sur la base du motif identifié. On constate que la grandeur physique prédite est proche des valeurs réelles de la courbe en pointillés.

### Etape 140 : renforcement de l'apprentissage

A l'issue de l'étape 130, la classe du motif détecté à l'instant $n$ est connue et peut alimenter la base de données d'apprentissage en l'intégrant au groupe de motifs associés à la même classe Ainsi, le centre de la classe est réévalué en prenant en compte le nouveau motif. Dans le cas où ce motif ne correspond à aucune classe connue, alors une nouvelle classe est créée et est prise en compte dans les données d'apprentissage pour identifier les motifs à venir. Cette nouvelle classe obtient donc pour centre de classe son unique motif. Cela permet un renforcement de l'apprentissage, notamment de façon non supervisée.

Au cours de cette étape, l'évènement identifié peut être analysé : durée, typologie. Des mesures préventives ou curatives peuvent être déterminées, de façon à limiter l'impact de l'évènement.

La figure 3B schématise les principales étapes d'un deuxième mode de réalisation de l'invention. Les étapes 70 à 90 sont similaires à celles décrites en lien avec la figure 3A. L'étape 200 est similaire à l'étape 100 décrite en lien avec la figure 3A.

Les étapes 200, 210, 220, 230 sont respectivement similaires aux étapes 100, 110, 120, 130 décrites en lien avec la figure 3A.

Parallèlement aux étapes 210, 220, 230 le procédé comporte :

Etape 205 : Prédiction. Il s'agit d'une étape de prédiction de la grandeur physique mesurée à des instants p postérieurs à l'instant de mesure $n$. La prédiction peut être effectuée en mettant en oeuvre un algorithme de prévision, par exemple un algorithme d'intelligence artificielle à apprentissage supervisé, de type réseau de neurones LSTM. Au cours de cette étape, des grandeurs physiques mesurées lors de la période d'acquisition sont utilisées en tant que données d'entrée de l'algorithme de prédiction. D'autres algorithmes de type Machine Learning peuvent être appliqués, par exemple le modèle statistique de prédiction de séries temporelles ARIMA (Autoregressive integrated moving average - moyenne mobile autorégressive intégrée) ou ARMA (Autoregressive moving average - moyenne mobile autorégressive).

L'algorithme de prédiction permet par exemple une prédiction de la grandeur physique mesurée durant une période de prédiction postérieure à l'instant de mesure ($n$ à $n$+10), à partir de signaux acquis à l'instant de mesure et/ou à des instants antérieurs à l'instant de mesure. Par exemple, la période de prédiction s'étend entre $n$ et n+10, à partir des signaux acquis durant les instants $n$-10 et $n$.

Suite à l'étape 205, une étape 210' de test de détection de la survenue d'un évènement est mise en oeuvre. Le test de détection de la survenue d'un motif est effectué selon les principes décrits dans l'étape 110 du premier mode de réalisation. Une différence est que la détection de motifs est effectuée à partir de grandeurs physiques mesurées (10 valeurs) mais aussi des valeurs prédites résultant de l'étape 205 (10 valeurs). Ainsi, l'instant de survenue de l'évènement est postérieur à l'instant de mesure de la prédiction.

Si aucun évènement n'a été détecté, les étapes 200 à 210' sont réitérées. Lorsqu'un évènement a été détecté, une étape 220' d'identification de l'évènement, parmi les motifs mémorisés, est effectuée. Cette étape est effectuée de façon similaire à l'étape 220 décrite en lien avec le premier mode de réalisation. A la différence de l'étape 220, l'identification du motif correspondant à l'évènement est réalisée à partir des grandeurs physiques mesurées (10 valeurs) et à partir des grandeurs physiques prédites (10 valeurs) lors de l'étape 205.

Etape 230' : après que le motif a été identifié, une étape 230' est mise en oeuvre, de façon à compléter la prédiction. Cette étape est similaire à l'étape 230 si ce n'est qu'elle est basée sur un motif identifié à partir de valeurs prédites. Comme pour l'étape 230, la prédiction est basée sur les premières valeurs du motif et les données d'apprentissage de sa classe associée.

Suite à l'étape 230', des actions préventives ou curatives peuvent être lancées, par exemple une évacuation d'un site

### Etape 240

De même que pour l'étape 140, au cours de l'étape 240, des mesures peuvent être prises pour limiter l'impact de l'évènement détecté.

Sur la figure 3B, les étapes 210', 220' et 230' sont mises en oeuvre en partie sur la base de mesures prédites. Elles sont donc effectuées avec une certaine avance temporelle, par rapport aux étapes 210, 220 et 230, qui sont effectuées en prenant en compte des valeurs mesurées.

Ainsi, comparativement au premier mode de réalisation, la détection de l'évènement survient de façon anticipée. Les mesures de limitation de l'impact de l'évènement peuvent être prises avec davantage d'anticipation.

L'étape 240 peut comporter une comparaison entre l'événement résultant de l'étape 230', sur la base de données en parties prédites, et l'évènement résultant de l'étape 230, qui est défini sur la base de données uniquement mesurées. La comparaison permet de déterminer un niveau d'exactitude de l'évènement résultant de l'étape 230' par rapport à l'évènement résultant de l'étape 230.

L'évènement peut ensuite être injecté dans la base de données, à des fins de renforcement d'apprentissage.

Quel que soit le mode de réalisation, un aspect important de l'invention est de pouvoir prévoir, le plus rapidement possible, la survenue d'un évènement ainsi que son identification. Cela permet une prévision de l'évolution des mesures. Il est alors possible d'anticiper des actions, au plus juste et au plus tôt, sur les causes et les conséquences des phénomènes, par exemple des actions de protection, de type mise en place de barrières physiques de protection, maintenances...

Sur les figures 6A à 6C, on a décrit une simulation représentant des mesures d'irradiation. L'invention peut s'appliquer à d'autres mesures, résultant d'un capteur. Il peut s'agir d'un capteur acoustique, par exemple dans le domaine du contrôle non destructif. Il peut s'agir d'un capteur de vibrations, ou de façon non limitative, d'un capteur optique, magnétique, électrique, chimique.

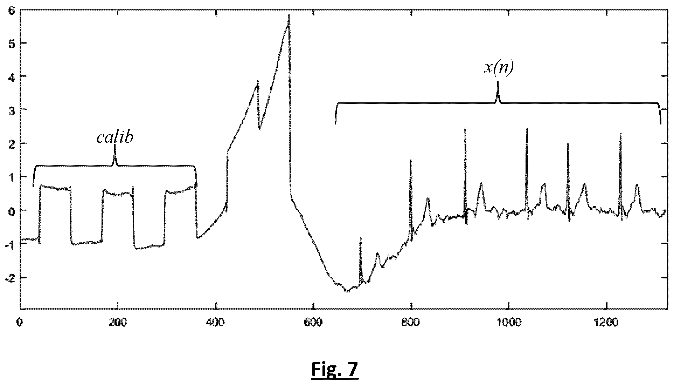

Les figures 7, 8, 9A et 9B représentent un exemple de mise en oeuvre de l'invention à des mesures de type électrocardiogramme. Sur ces figures, on a pris en compte des données de la base de données LTAF (Long Term Asset Funds), décrite dans PETRUTIU, Simona, SAHAKIAN, Alan V., et SWIRYN, Steven. Abrupt changes in fibrillatory wave characteristics at the termination of paroxysmal atrial fibrillation in humans. Europace, 2007, vol. 9, no 7, p. 466-470.

Sur la figure 7, on a représenté des exemples de grandeurs physiques acquises, de façon à constituer des classes de motifs. Le signal enregistré comporte trois signaux de calibration successifs, désignés calib sur la figure 7, puis d'un signal transitoire, et des signaux de mesure x(n) correspondant à 6 battements cardiaques successifs. Il s'agit d'un exemple d'application de l'étape 70 précédemment décrite.

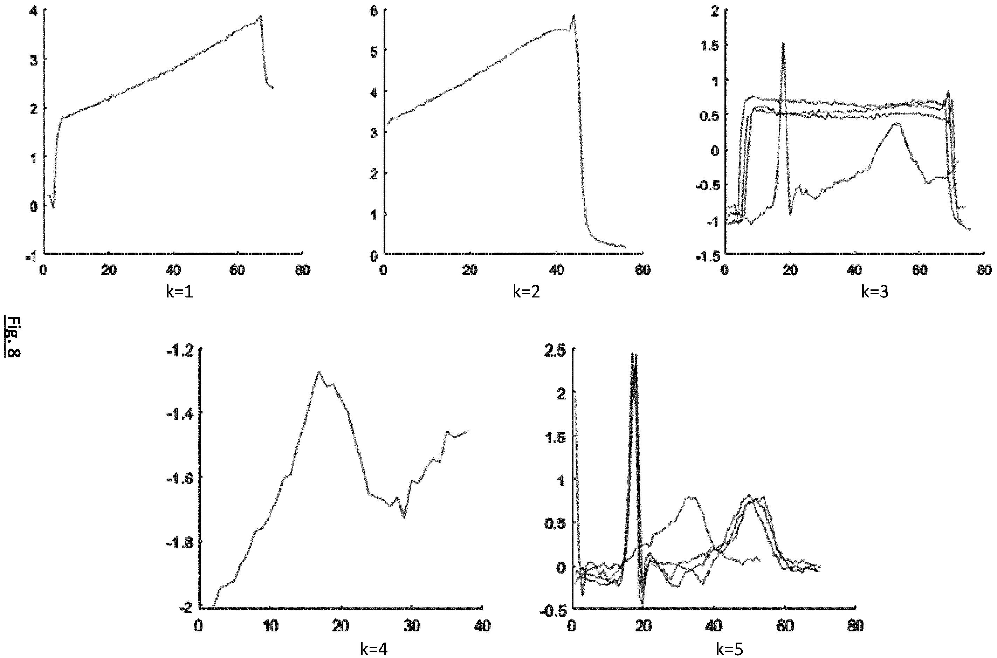

Sur la figure 8, on a représenté 5 classes de motifs obtenues sur la base de données telle que représentée sur la figure 7. Il s'agit d'un exemple d'application de l'étape 90 précédemment décrite.

Les classes 3 et 5 représentent chacune une forme de signal distincte. On remarque un motif mal classé dans la classe 3, cette erreur s'explique par le fait que la méthode de classification utilisée (K-means) n'est pas optimisée. Les motifs dans les classes 1, 2 et 4 sont des motifs isolés et rangés dans des classes contenant un seul motif unique puisqu'ils ne s'apparentent pas aux formes des autres motifs.

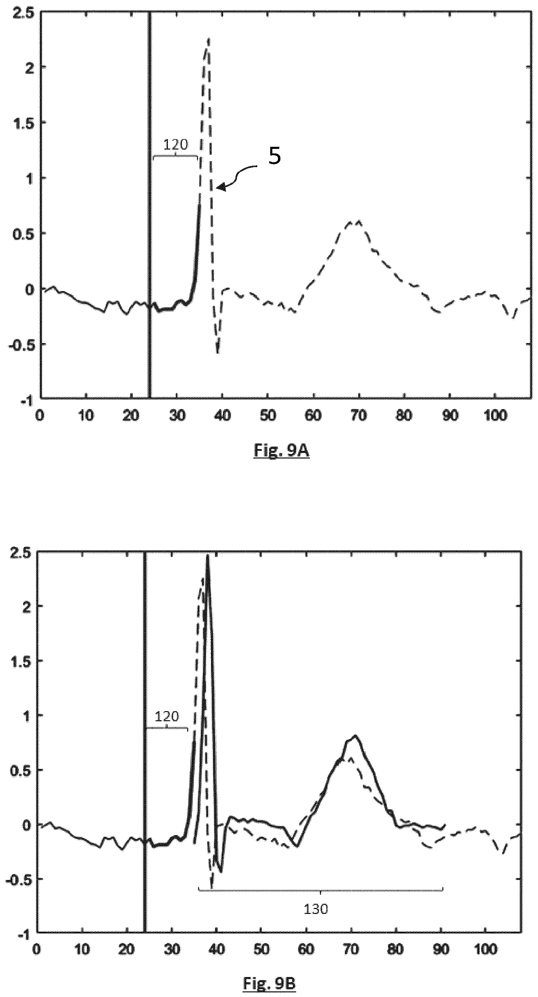

Les figures 9A et 9B illustrent une application des étapes 100 à 130 décrites en lien avec la figure 3A. Sur la figure 9A, on a représenté une grandeur physique mesurée jusqu'à un franchissement de seuil, l'instant de franchissement étant matérialisé par une ligne verticale. L'instant de franchissement correspond à l'instant de détection de survenue d'un évènement. Les mesures exactes correspondant aux instants postérieurs à l'instant de détection de survenue de l'évènement sont représentées en pointillés.

Sur la figure 9A, on a représenté les mesures permettant une identification de l'évènement ayant déclenché le franchissement du seuil. Ces mesures correspondent à l'accolade 120. Il s'agit d'un évènement correspondant au motif 5 de la figure 8. Le dernier instant de l'accolade 120 correspond à l'instant d'identification de l'évènement.

Sur la figure 9B, on a représenté les mesures prédites à partir de l'évènement identifié. Les mesures prédites, aux instants postérieurs à l'instant d'identification de l'évènement, correspondent à l'accolade 130. La courbe en pointillés montre les mesures réelles. On observe une bonne adéquation entre les mesures réelles et les mesures prédites.

**Revendications**

1. Procédé de prédiction de la survenue d'un évènement à partir d'au moins une mesure d'une grandeur physique effectuée en différents instants, le procédé comportant les étapes suivantes :

   - a) constitution d'une base de données, comportant au moins un motif, le ou chaque motif étant une série de valeurs de la grandeur physique, en différents instants successifs, chaque motif étant représentatif d'un évènement ;
   - b) acquisition de mesures de la grandeur physique ($x(n)$) par au moins un détecteur (10) en différents instants de mesure successifs, formant une période d'acquisition, de façon à former une série temporelle de mesures ;
   - c) à chaque instant de mesure :

      • c-i) à partir de mesures acquises à des instants antérieurs à l'instant de mesure, application d'un algorithme de prédiction, de façon à prédire des mesures à des instants postérieurs à l'instant de mesure, les mesures acquises durant la période d'acquisition formant des données d'entrée de l'algorithme de prédiction ;
• c-ii) à partir de la série temporelle de mesures et des mesures prédites dans c-i), application d'un test de détection de la survenue d'un évènement à un instant de survenue d'évènement, l'instant de survenue d'évènement correspondant un instant postérieur à l'instant de mesure ;

- d) - en cas de détection de la survenue d'un évènement, identification de l'évènement en fonction de chaque motif de la base de données, l'identification de l'évènement survenant à un instant d'identification ;

- en l'absence de détection de la survenue d'un évènement, réitération des étapes a) à c) ;

- e) après que l'évènement a été identifié, prévision de mesures à des instants postérieurs à l'instant d'identification ;

les étapes c) à e) étant mises en oeuvre par une unité de traitement (20).

2. Procédé selon la revendication 1, dans lequel l'étape a) comporte :

- ai) réalisation de mesures de la grandeur physique durant une période d'observation, la période d'observation comportant différents instants d'observation ;
- aii) application d'un test de détection de survenue d'évènement à chaque instant d'observation ;
- aiii) en cas de détection de la survenue d'un évènement, mémorisation des grandeurs physiques mesurées postérieurement à la détection, de façon à former une série temporelle d'observation ;
- aiv) application d'un algorithme de classification à chaque série temporelle d'observation, de façon à définir au moins une classe représentative d'un évènement, ladite classe étant associée à un motif.

3. Procédé selon la revendication 2, dans lequel l'étape aii) est effectuée de façon non supervisée, sur la base des mesures de la grandeur physique résultant de l'étape ai).

4. Procédé selon la revendication 2 ou la revendication 3, dans l'étape aiv) comporte une définition de plusieurs classes, les classes étant respectivement associées à différents motifs.

5. Procédé selon l'une quelconque des revendications précédentes, dans lequel lors de l'étape a), au moins un motif de la base de données est un motif obtenu par modélisation.

6. Procédé selon l'une quelconque des revendications précédentes, dans lequel lors de l'étape e), la prévision des mesures est réalisée en utilisant le motif associé à l'évènement identifié lors de l'étape d).

7. Procédé selon l'une quelconque des revendications précédentes dans lequel lors de l'étape c), le test est basé sur une détection d'un franchissement d'un seuil.

8. Procédé selon l'une quelconque des revendications précédentes, dans lequel :

- la base de données comporte des classes, chaque classe correspondant à un motif ;
- lors de l'étape d), en cas de détection de la survenue d'un évènement, lorsque l'évènement détecté n'est pas identifié parmi les classes de la base de données, la base de données est réactualisée, de façon prendre en compte une nouvelle classe correspondant à l'évènement détecté.

9. Procédé selon l'une quelconque des revendications précédentes, dans lequel :

- la base de données comporte des classes, chaque classe correspondant à un motif ;
- lors de l'étape d), en cas de détection de la survenue d'un évènement, lorsque l'évènement détecté est identifié parmi une classe de la base de données, ladite classe est mise à jour, en prenant en compte l'évènement détecté.

10. Procédé selon l'une quelconque des revendications précédentes, dans lequel suite à une étape e), une acquisition des mesures correspondant à l'évènement identifié, lesdites mesures formant une série de valeurs alimentant la base de données.

11. Procédé selon l'une quelconque des revendications précédentes, dans lequel la grandeur physique est une grandeur choisie parmi :

- un niveau d'irradiation ;
- une concentration d'un analyte dans un milieu gazeux ou liquide ;
- un niveau de température ou d'humidité ou de pression ;

- une mesure électrique ou électrostatique ou magnétique ou acoustique.

12. Système de mesure, comportant :

- un détecteur (10), configuré pour mesurer une grandeur physique par au moins un détecteur en différents instants de mesure successifs, de façon à former une série temporelle de mesures ;
- une unité de traitement (20), configuré pour mettre en oeuvre les étapes c) à e) d'un procédé selon l'une quelconque des revendications précédentes, à partir de mesures de la grandeur physique résultant du détecteur, l'unité de traitement étant reliée à une mémoire stockant une base de données, comportant au moins un motif, le ou chaque motif étant une série de valeurs de la grandeur physique, en différents instants successifs, chaque motif étant représentatif d'un évènement.

Fig. 1

Fig. 2

**Fig. 3A**

**Fig. 3B**

**Fig. 4**

**Fig. 5A**

**Fig. 5B**

16

**Fig. 6A**

**Fig. 6B**

**Fig. 6C**

**Fig. 7**

k=1

k=2

k=3

k=4

k=5

Fig. 8

Fig. 9A

Fig. 9B

Europäisches
Patentamt

European
Patent Office

Office européen
des brevets

## RAPPORT DE RECHERCHE EUROPEENNE

Numéro de la demande

EP 24 22 3599

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/239755 A1 (AGGOUR KAREEM SHERIF [US] ET AL) 18 août 2016 (2016-08-18) * colonne 2, ligne 27 - colonne 9, ligne 38 * | 1-12 | INV. G06F17/18 G06N20/00 G06F18/2431 |
| X | US 11 551 111 B2 (PTC INC [US]) 10 janvier 2023 (2023-01-10) * alinéas [0018], [0023], [0028], [0031], [0036], [0038], [0039], [0045] - [0049], [0051] - [0058] * | 1-12 | |
| X | Poirier--Herbeck Lisa ET AL: "Classification de séries temporelles de longueurs variables pour la surveillance radiologique de l'environnement", , 22 novembre 2022 (2022-11-22), XP093279957, Extrait de l'Internet: URL:https://centralesupelec.hal.science/hal-03866144v1/file/2022_poirierherbeck923.pdf * le document en entier * | 1-12 | |
| A | POIRIERNHERBECK LISA ET AL: "Unknown-length motif discovery methods in environmental monitoring time series", 2022 INTERNATIONAL CONFERENCE ON ELECTRICAL, COMPUTER AND ENERGY TECHNOLOGIES (ICECET), IEEE, 20 juillet 2022 (2022-07-20), pages 1-5, XP034181459, DOI: 10.1109/ICECET55527.2022.9873093 * le document en entier * | 1-12 | |

**DOMAINES TECHNIQUES RECHERCHES (IPC)**

G06F
G06N
G06V

-/--

Le présent rapport a été établi pour toutes les revendications

| Lieu de la recherche | Date d'achèvement de la recherche | Examinateur |
|---|---|---|
| La Haye | 22 mai 2025 | Michel, Thierry |

EPO FORM 1503 03.82 (P04C02)

page 1 de 2

| | Europäisches Patentamt European Patent Office Office européen des brevets | **RAPPORT DE RECHERCHE EUROPEENNE** | Numéro de la demande EP 24 22 3599 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | NOERING FABIAN KAI-DIETRICH ET AL: "Pattern discovery in time series using autoencoder in comparison to nonlearning approaches", INTEGRATED COMPUTER-AIDED ENGINEERING , vol. 28, no. 3 29 juin 2021 (2021-06-29), pages 237-256, XP093189378, NL ISSN: 1069-2509, DOI: 10.3233/ICA-210650 Extrait de l'Internet: URL:https://pdfs.semanticscholar.org/1e18/ 8413a5fb4e0975af0be455bbde1a9ba96859.pdf [extrait le 2024-07-24] * le document en entier * ----- | 1-12 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 22 mai 2025 | Michel, Thierry |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................................
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 24 22 3599

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-05-2025

| Document brevet cité au rapport de recherche | Date de publication | Membre(s) de la famille de brevet(s) | Date de publication |
|---|---|---|---|
| US 2016239755 A1 | 18-08-2016 | EP 3055746 A1 | 17-08-2016 |
| | | US 2016239755 A1 | 18-08-2016 |
| | | WO 2015053773 A1 | 16-04-2015 |
| US 11551111 B2 | 10-01-2023 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20160239755 A

- US 11551111 B

**Littérature non-brevet citée dans la description**

- **C.-C. M. YEH** ; **Y. ZHU** ; **L. ULANOVA** ; **N. BEGUM** ; **Y. DING** ; **H. A. DAU** ; **D. F. SILVA** ; **A. MUEEN** ; **E. KEOGH**. Matrix profile i: all pairs similarity joins for time series: a unifying view that includes motifs, discords and shapelets. *IEEE 16th international conférence on data mining (ICDM)*, 2016, 1317-1322

- **M. TOYODA** ; **Y. SAKURAI** ; **Y. ISHIKAWA**. Pattern discovery in data streams under the time warping distance. *The VLDB Journal*, 2013, vol. 22 (3), 295-318

- Unsupervised interpretable pattern discovery in time séries using autoencoders. **K. BASCOL** ; **R. EMONET** ; **E. FROMONT** ; **J. M. ODOBEZ**. Joint IAPR International Workshops on Statistical Techniques in Pattern Recognition (SPR) and Structural and Syntactic Pattern Recognition (SSPR). Springer, 2016, 427-438

- **ARTUR, DAVID**. K-means++ : the advantages of Careful Seeding.. *SODA'07 : Proceedings of the Eighteenth Annual ACM-SIAM Sympsium of Discrète Algorithms*, 2007, 1027-1035

- **KAUFMAN, L.** ; **ROUSSEEUW, P. J.** Finding Groups in Data: An Introduction to Cluster Analysis. John Wiley & Sons, Inc., 2009

- **SIBSON, ROBIN**. SLINK: an optimally efficient algorithm for the single-link cluster method.. *The computer journal*, 1973, vol. 16 (1), 30-34

- **HOCHREITER, SEPP** ; **JÜRGEN SCHMIDHUBER**. Long short-term memory.. *Neural computation*, 1997, vol. 9 (8), 1735-1780

- **PETRUTIU, SIMONA** ; **SAHAKIAN, ALAN V.** SWI-RYN, Steven. Abrupt changes in fibrillatory wave characteristics at the termination of paroxysmal atrial fibrillation in humans. *Europace*, 2007, vol. 9 (7), 466-470